# EUROPÄISCHE PATENTSCHRIFT

(11) **EP 4 376 666 B1**
(45) Veröffentlichungstag und Bekanntmachung des Hinweises auf die Patenterteilung: **12.11.2025**
(21) Anmeldenummer: 22757948.9
(22) Anmeldetag: 28.07.2022
(51) Int. Cl.: A45C 11/00, A45C 13/00, A62C 2/06, A62C 3/16, B65D 81/00, F16L 5/04, H04B 1/3888, B65D 5/50

(54) **FEUERBESTÄNDIGER BEHÄLTER ZUR AUFNAHME EINES GEGENSTANDES**
FIRE-RESISTANT CONTAINER FOR HOLDING AN OBJECT
CONTENANT RÉSISTANT AU FEU DESTINÉ À CONTENIR UN OBJET

(30) Priorität: 28.07.2021 AT 506222021
(43) Veröffentlichungstag der Anmeldung: 05.06.2024
(73) Patentinhaber: Reinwald, Bernhard, 8700 Leoben (AT)
(72) Erfinder: Reinwald, Bernhard, 8700 Leoben (AT)
(74) Vertreter: Dilg, Haeusler, Schindelmann Patentanwaltsgesellschaft mbH
(86) Internationale Anmeldenummer: PCT/EP2022/071245
(87) Internationale Veröffentlichungsnummer: WO 2023/006896

(56) Entgegenhaltungen:
- WO-A1-2019/063099
- DE-A1- 10 010 270
- DE-U1- 8 808 393
- GB-A- 2 510 557
- GB-A- 2 589 555

## Beschreibung

### Technisches Gebiet

Die Erfindung betrifft einen feuerbeständigen Behälter zur Aufnahme eines Gegenstandes, insbesondere eines Mobiltelefons.

### Hintergrund der Erfindung

Aus dem Stand der Technik bekannte feuerbeständige Behälter können prinzipiell in zwei Arten unterschieden werden. Dabei soll eine erste Art einen Brand von Gegenständen im Inneren des Behälters fernhalten, wohingegen eine zweite Art ein Übergreifen des Brandes von Gegenständen im Behälter auf eine Umgebung verhindern soll.

### Behälter der ersten Art werden beispielsweise von den Dokumenten

US 2002/0056713 A1 oder GB 2523303 A offenbart. Um eine Isolation gegenüber dem außerhalb des Behälters befindlichen Brandherd zu schaffen, setzen derartige Behälter auf stabile und dichte Deckel sowie intumeszierende Materialien, welche zum Teil als Zwischenschichten in eine Behälterwand eingebracht werden. Entsprechend kann durch ein Ausdehnen des intumeszierenden Materials ein Querschnitt der Behälterwände erhöht werden, wodurch isolierende Eigenschaften der Behälterwände verstärkt und eine Abdichtung des Deckels verbessert wird. Dadurch können Gegenstände wie Dokumente, Fotografien oder elektronische Steuereinheiten im Inneren des Behälters für eine längere Zeitspanne vor dem Brand geschützt werden.

Behälter der zweiten Art basieren auf der Grundlage, dass ein Brandobjekt im Behälter eingeschlossen wird. Dies wird in der Regel dadurch erreicht, dass der Behälter über den Deckel dicht verschlossen wird und der Behälter gegebenenfalls mit einer Löscheinrichtung versehen ist. Hierzu vorgesehene Löscheinrichtungen setzen im Brandfall zumeist einen Superabsorber frei, welcher das Brandobjekt bedeckt. Um auf ein manuelles Auslösen der Löscheinrichtung verzichten zu können, besteht diese in der Regel aus mehreren Komponenten, die einen Zeitpunkt bestimmen, an welchem der Superabsorber freigesetzt wird.

GB 2510557 A offenbart einen feuerfesten oder feuerbeständigen Behälter, der typischerweise zum Schutz von Schaltkästen, Stellantrieben und anderen elektrischen oder mechanischen Systemen im Brandfall verwendet wird. Der Behälter besteht aus einem wannenförmigen Deckel und einem Bodenteil. Das Deckelteil hat eine äußere Schicht aus glasfaserverstärktem Kunststoff (GFK), an der auf einer Innenseite eine Schicht aus Keramikfaserplatten angebracht ist, die zusammen eine erste Schicht bilden. An der Basis des Deckelteils ist auf der Innenseite der Keramikfaserplatte eine Schicht aus intumeszierendem Schaum angebracht. Zwischen der ersten Schicht und dem Kammerinneren befindet sich in einem Bereich um eine Öffnung des Behälters, durch die elektrische Kabel geführt werden, eine zweite Schicht aus einem Isoliermaterial aus Kunstfasern.

Entsprechend weisen bereits bekannte feuerbeständige Behälter die Nachteile auf, dass das Übergreifen des Brandes von Gegenständen im Behälter auf eine Umgebung zum einen vom dichten Abschluss zwischen Deckel und Behälter und zum anderen von der Löscheinrichtung, welche zumeist aus mehreren Komponenten besteht, verhindert wird, sodass Behälter des Standes der Technik aufwendig in einer Herstellung und kompliziert in der Handhabung sind.

### Darstellung der Erfindung

Aufgabe der Erfindung ist es daher, einen feuerbeständigen Behälter der eingangs genannten Art bereitzustellen, bei welchem die Nachteile des Standes der Technik vermieden oder zumindest verringert sind.

Diese Aufgabe wird erfindungsgemäß dadurch gelöst, dass der feuerbeständige Behälter der eingangs genannten Art eine Öffnung aufweist, über welche der Gegenstand in den Behälter einbringbar ist, wobei an einer Innenseite des Behälters zumindest bereichsweise ein intumeszierendes Material derart angeordnet ist, dass sich das intumeszierende Material bei einer Brandentwicklung im Bereich eines im Behälter angeordneten Gegenstandes ausdehnt, sodass eine durch die Öffnung verlaufende Verbindung zwischen dem Gegenstand und einer Umgebung durch das ausgedehnte Material unterbrochen ist, um ein Übergreifen eines Brandes des Gegenstandes auf die Umgebung zu verhindern. Der feuerbeständige Behälter weist ferner ein Verschlusselement auf, welches an der Innenseite des Behälters derart angeordnet und konfiguriert ist, in einem ersten Zustand die Öffnung freizugeben und in einem zweiten Zustand die Öffnung zu verschließen.

Entsprechend wird mit einem weiteren Aspekt ein Verfahren zum Schützen eines Gegenstandes in einem feuerbeständigen Behälter zur Aufnahme des Gegenstandes, insbesondere eines Mobiltelefons, beschrieben. Gemäß dem Verfahren wird in dem Behälter eine Öffnung bereitgestellt, durch welche der Gegenstand in den Behälter einbringbar ist. Ein intumeszierendes Materials wird zumindest bereichsweise an einer Innenseite des Behälters derart angeordnet, dass sich das intumeszierende Material bei einer Brandentwicklung im Bereich eines im Behälter angeordneten Gegenstandes ausdehnt, sodass eine durch die Öffnung verlaufende Verbindung zwischen dem Gegenstand und einer Umgebung durch das ausgedehnte Material unterbrochen ist, um ein Übergreifen eines Brandes des Gegenstandes auf die Umgebung zu verhindern. Gemäß dem Verfahren wird ein Verschlusselement bereitgestellt, welches an der Innenseite des Behälters derart angeordnet ist und konfiguriert ist, in einem ersten Zustand die Öffnung freizugeben und in einem zweiten Zustand die Öffnung zu verschließen, wobei bei einer Brandentwicklung das Verschlusselement zuerst die Öffnung schließt und die Öffnung wird anschließend von dem ausgedehnten intumeszierendem Material verschlossen.

Ein mit dem erfindungsgemäßen feuerbeständigen Behälter erzielter Vorteil ist insbesondere darin zu sehen, dass ein Übergreifen des Brandes auf die Umgebung besonders schnell und effizient verhindert werden kann, wobei gleichzeitig der Behälter einfach ausgebildet und einfach handhabbar ist. Hierbei wird der Gegenstand, insbesondere das Mobiltelefon, über die Öffnung in den feuerbeständigen Behälter gelegt. Für gewöhnlich ist ein derartiger Gegenstand mit einem Akkumulator ausgestattet, wobei der Akkumulator vorzugsweise innerhalb des Gegenstandes angeordnet ist.

Dementsprechend können sämtliche tragbare elektronische Geräte, wie beispielsweise Mobiltelefone, Tablets und Laptops oder Ladestationen, bzw. induktive Ladestationen für elektronische Geräte, aber auch zumindest teilweise elektrisch betriebene Transportmittel, wie beispielsweise Elektroscooter, Elektrofahrzeuge oder Hybridfahrzeuge, als derartige Gegenstände angesehen werden. Im Falle einer Überhitzung des Gegenstandes, welche sich sowohl durch äußere Temperatureinwirkung auf den Gegenstand oder den darin befindlichen Akkumulator als auch eine Überlastung, eine Beschädigung oder eine fortgeschrittene Alterung des Akkumulators ergeben kann, steigt eine Temperatur des Akkumulators signifikant an. Die daraus resultierende Überhitzung des Akkumulators führt üblicherweise zu einer exothermen Reaktion zwischen Akkumulatorkomponenten, insbesondere der Elektrodenmaterialien und des Elektrolyten. Mit zunehmender Freisetzung einer in den Elektrodenmaterialien gespeicherten Energie, in Fachkreisen auch thermisches Durchgehen genannt, entstehen in einer oder mehrerer Zellen des Akkumulators Gase, durch welche sich der Akkumulator aufbläht. In weiterer Folge kommt es zum Entflammen und/oder Explodieren einzelner, mehrerer oder aller Zellen des Akkumulators.

Um den damit einhergehenden Brand des Gegenstandes bestmöglich am Übergreifen auf die Umgebung zu hindern, ist der Behälter erfindungsgemäß feuerbeständig ausgebildet. In diesem Zusammenhang bedeutet feuerbeständig beispielsweise, dass der Behälter zumindest teilweise aus einem Material gebildet ist, welches einem Feuer, beispielsweise einer Temperatur von zumindest 300 °C, bevorzugt zumindest 800 °C, für zumindest zehn Minuten ausgesetzt sein kann, ohne dass dieses wesentliche Funktionseigenschaften verliert. Dabei werden wesentliche Funktionseigenschaften vorzugsweise in einer Formbeständigkeit des Behälters gesehen, wobei auch andere, insbesondere zu einer Stabilität des Behälters beitragende, Funktionseigenschaften über den oben genannten Zeitraum erhalten bleiben können.

Zudem ist an einer Innenseite des Behälters zumindest bereichsweise ein intumeszierendes Material angeordnet. Derartige Materialien werden oftmals auch als Dämmschichtbildner bezeichnet und in verschiedensten Formen, beispielsweise als Anstriche oder Matten, angeboten. Bei erhöhten Temperaturen, insbesondere beim Brand des Gegenstandes oder im Bereich des Gegenstandes, dehnt sich das intumeszierende Material selbsttätig auf zumindest das dreifache, bevorzugt zumindest das 50-fache, besonders bevorzugt zumindest das 250-fache, seines ursprünglichen Volumens aus. Die erforderliche Temperatur zur vollständigen Ausdehnung des intumeszierenden Materials hängt maßgeblich von dessen Zusammensetzung ab. Vorzugsweise setzt sich ein intumeszierendes Material aus einem Kohlenstoffspender, einem Säurespender und einem Treibmittel zusammen. Beim Erhitzen eines derartigen Materials wird der Kohlenstoffspender vom Säurespender verkohlt und das entstehende Gemisch vom Treibmittel ausgedehnt. Darüber hinaus können mehrere Wirkungsweisen des intumeszierenden Materials unterschieden werden, wobei das Material sich ausdehnen und eine isolierende Schutzschicht erzeugt, ein Bestandteil des Materials endotherm verdunsten und eine chemische Kühlung hervorgerufen und/oder einen Hohlraum füllen und damit ein Bereich abgeschottet werden kann. An der Innenseite des erfindungsgemäßen Behälters ist das intumeszierende Material derart angeordnet, dass bei einem Ausdehnen des intumeszierenden Materials die durch die Öffnung verlaufende Verbindung zwischen dem Gegenstand und der Umgebung unterbrochen wird. Zum Unterbrechen der Verbindung ist es jedoch nicht erforderlich, dass das ausgedehnte Material den gesamten Behälter ausfüllt. Vielmehr ist es ausreichend, dass das ausgedehnte Material den Gegenstand bedeckt und/oder die Öffnung des Behälters verschließt. Dabei gilt die Verbindung auch dann als unterbrochen, wenn das ausgedehnte Material eine Oberfläche des Gegenstandes zu mindestens 60 % bedeckt und eine Fläche der Öffnung zu mindestens 90 % verschließt. Besonders effizient kann die Öffnung verschlossen werden, wenn das intumeszierende Material nahe der Öffnung des Behälters angeordnet ist. Alternativ kann das intumeszierende Material auch bereichsweise an mehreren Innenseiten des Behälters angeordnet sein. Auf diese Weise kann der Gegenstand besonders effizient vom ausgedehnten Material bedeckt und/oder umschlungen werden. Unabhängig von der konkreten Anordnung des intumeszierenden Materials kann dieses auf schnelle und effiziente Weise ein Übergreifen des Brandes auf
die Umgebung verhindern.

Mit Vorteil ist vorgesehen, dass der Behälter zumindest eine weitere Öffnung aufweist, über welche ein Inneres des Behälters zugänglich ist. Dadurch kann der Gegenstand, insbesondere das Mobiltelefon, innerhalb des Behälters besonders einfach an eine Stromversorgung angeschlossen werden. Dabei kann die Stromversorgung über ein Ladekabel hergestellt werden, welches über die weitere Öffnung in den Behälter geführt ist. Zudem ist die weitere Öffnung vorzugsweise mit der Öffnung des Behälters verbunden, sodass der Gegenstand beim Einbringen in den Behälter an die Stromversorgung angeschlossen bleiben kann. Die weitere Öffnung ist bevorzugt so dimensioniert, dass ein Kabel des Ladekabels, nicht jedoch dessen Stecker, die weitere Öffnung passieren kann. Auf diese Weise kann ein ruckartiges und/oder schnelles Herausziehen des Ladekabels aus dem Behälter verhindert werden. Ein derartiges Herausziehen des Ladekabels kann mit einer Beschädigung des Gegenstandes, insbesondere durch einen Aufprall des Gegenstandes an der Innenseite des Behälters, einhergehen und in Folge den Brand auslösen.

Alternativ kann eine Stromversorgung auch über ein Induktionsladegerät hergestellt sein. Dieses kann entweder direkt in Behälterwände eingebaut oder innerhalb des Behälters positioniert sein. In beiden Fällen kann das Kabel zur Stromversorgung des Induktionsladegerätes über die weitere Öffnung geführt sein. Vorzugsweise ist an Innenseiten des Behälters, welche an die weitere Öffnung angrenzen, zumindest bereichsweise intumeszierendes Material angeordnet. Dieses dehnt sich beim Brand des Gegenstandes aus, wodurch die weitere Öffnung vom ausgedehnten Material zumindest teilweise verschlossen werden kann. Entsprechend wird eine Verbindung zwischen dem Gegenstand und der Umgebung durch die weitere Öffnung unterbrochen. Vorzugsweise ist der Behälter zumindest bereichsweise aus Metall, insbesondere Stahl, Keramik und/oder Gestein gebildet. Hierdurch kann eine besonders hohe Stabilität des Behälters erzielt werden. Bevorzugt bilden derartige Materialien ein Grundgerüst des Behälters. Dabei kann als Metall ein Blech, insbesondere Stahlblech, genutzt werden, welches vorzugsweise eine Dicke von mehr als 1 mm aufweist. Der Behälter kann aus einem einzelnen oder mehreren Blechen hergestellt sein, welche durch Stanzen oder Schneiden derart vorbereitet werden, dass durch anschließendes Umformen, insbesondere Biegen, und/oder Verschweißen der Bleche eine Form des Behälters festgelegt wird. Da die Form eine Öffnung aufweist, ergibt sich in der Regel eine Schachtel- oder Boxform des Behälters. Alternativ kann der Behälter auch durch andere
Arten des Umformens, insbesondere durch Tiefziehen, aus nur einem Stück Blech hergestellt werden.

Zudem kann der Behälter auch aus Keramik oder Gestein gebildet sein. Dabei kommen für gewöhnlich keramische Materialien wie Irdengut oder Sintergut zur Anwendung. Derartige Behälter zeichnen sich durch besonders gute Feuerbeständigkeit aus und sind für gewöhnlich sehr dicht. Behälter aus Gestein, insbesondere Naturstein, weisen ebenfalls eine ausgezeichnete Feuerbeständigkeit auf, benötigen jedoch zumeist deutlich längere Verarbeitungszeiten als Metalle oder Keramiken. Alternativ kann der Behälter zumindest bereichsweise auch aus Holz und/oder Kunststoff gebildet sein. Hierdurch kann der Behälter auf besonders einfache und zeitsparende Weise hergestellt und/oder bearbeitet werden.

Es hat sich bewährt, dass der Behälter zumindest bereichsweise aus einem feuerbeständigen, insbesondere silicatbasierten, Material gebildet ist. Dadurch kann eine Ausbreitung des Brandes besonders effizient verhindert werden. Hierbei können sowohl einzelne Bereiche der Behälterwände, ganze Behälterwände oder auch der gesamte Behälter aus feuerbeständigem Material gefertigt sein. Zudem ist es vorteilhaft, die Behälterwände auf der Innenseite und/oder einer Außenseite mit feuerbeständigen Materialien auszukleiden bzw. zu verkleiden. Dabei ist das feuerbeständige Material bevorzugt mit einer Dicke von 1 mm bis 150 mm, besonders bevorzugt von 2 mm bis 15 mm, ausgebildet. Zweckmäßigerweise kommen dabei feuerbeständige Materialien auf 10 Basis von Aluminium- und/oder Calciumsilicat, wie beispielsweise faser- oder unverstärkte Gipsplatten, Faserzementplatten oder zementgebundene Leichtbetonplatten, zur Anwendung. Diese Materialien weisen in der Regel eine geringe Dichte auf, gelten als nicht brennbar und sind leicht verarbeitbar. Es hat sich bewährt, jene Bereiche des Behälters aus derartigen Materialien zu bilden und/oder mit derartigen Materialien zu versehen, welche direkt mit dem Gegenstand und/oder einem Brandherd in Kontakt kommen. Unter direktem Kontakt mit dem Gegenstand wird auch verstanden, dass der Gegenstand über eine Auflage mit dem Material in Kontakt steht.

Zweckmäßigerweise weist der Behälter eine Grundfläche mit zumindest einer angrenzenden Seitenfläche auf, wobei die angrenzende Seitenfläche mit zumindest einer weiteren Seitenfläche verbunden ist. Hierdurch kann der Behälter besonders einfach und zeitsparend hergestellt werden. Dabei kann der Behälter eine Schachtel- oder Boxform mit einer Grund- und vier angrenzenden Seitenflächen aufweisen und die Fläche der Öffnung eine ganze Seitenfläche umfassen. Alternativ kann der Behälter auch eine geringere Zahl an angrenzenden Seitenflächen aufweisen. Bevorzugt wird bei einem derartigen Behälter der Gegenstand auf der Grundfläche abgelegt, wobei die Grundfläche teilweise oder zur Gänze aus feuerbeständigem, insbesondere silicatbasiertem, Material gebildet sein kann. Außenabmessungen des Behälters sind in der Regel derart gewählt, dass dieser eine Länge von 182 mm bis 10000 mm, eine Breite von 102 mm bis 6000 mm und eine Höhe von 17 mm bis 4000 mm aufweist. Entsprechend belaufen sich Innenabmessungen des Behälters in der Länge auf 180 mm bis 9700 mm, in der Breite auf 100 mm bis 5700 mm und in der Höhe auf 15 mm bis 3700 mm, weshalb Gegenstände unterschiedlicher Größen und/oder Formen in den Behälter eingebracht werden können. Ein Behälter zur Aufnahme von Mobiltelefonen weist bevorzugt Außenabmessungen mit einer Länge von 182 mm bis 430 mm, einer Breite von 102 mm bis 280 mm und einer Höhe von 17 mm bis 150 mm sowie Innenabmessungen mit einer Länge von 180 mm bis 400 mm, einer Breite von 100 mm bis 250 mm und einer Höhe von 15 mm bis 120 mm auf.

Um Beschädigungen des Gegenstandes zu vermeiden, kann auf der Innenseite des Behälters eine Auflage aus weichem Material wie Textil, insbesondere Filz, oder Kunststoff angeordnet sein. Unter weichem Material wird verstanden, dass dieses weicher ist als jenes Material, auf welchem die Auflage angeordnet ist. Diese Auflage weist üblicherweise eine Dicke von mindestens 0,1 mm auf und kann über eine Kleberschicht an der jeweiligen Innenseite des Behälters befestigt werden. Vorzugsweise ist die Auflage an der Grundfläche, insbesondere zwischen dem Gegenstand und der Grundfläche, des Behälters angeordnet. Zudem ist eine Fläche der Auflage zumindest gleich groß wie eine Grundfläche des Gegenstandes, bevorzugt um zumindest 10 % größer als die Grundfläche des Gegenstandes.

Mit Vorteil ist vorgesehen, dass die angrenzende Seitenfläche und die weitere Seitenfläche einen Winkel von 90° bis 175°, bevorzugt von 125° bis 160°, einschließen. Dadurch kann eine Verbindung zwischen dem Gegenstand und der Umgebung besonders schnell unterbrochen werden. Durch ein Verbinden einer angrenzenden Seitenfläche und einer weiteren Seitenfläche in einem Winkel von 90° bis 175°, bevorzugt von 125° bis 160°, kann eine abgeschrägte Behälterwand erhalten werden. Eine derart abgeschrägte Behälterwand kann sich insofern förderlich auf das Verhindern des Brandes auswirken, als das intumeszierende Material beim Ausdehnen so umgelenkt werden kann, dass dieses die Verbindung zwischen dem Gegenstand und der Umgebung schneller unterbricht. Hierzu kann die weitere Seitenfläche als eine Art Schrägdach ausgebildet sein, wobei die weitere Seitenfläche nicht parallel zur Grundfläche verläuft aber über die angrenzende Seitenfläche mit dieser verbunden ist. Darüber hinaus ist bei einem Behälter mit einer solchen abgeschrägten Behälterwand ein Platzbedarf besonders gering.

Vorzugsweise ist das intumeszierende Material als Schaum, Matte, Platte, Folie und/oder Streifen ausgebildet. Hierdurch kann das intumeszierende Material besonders einfach an der Innenseite des Behälters angeordnet werden. Im Falle der Ausbildung des intumeszierenden Materials als Matte, Folie oder Streifen kann eine stoffschlüssige Verbindung, insbesondere eine Kleberschicht, vorgesehen sein, um eine besonders gute Haftung auf der Innenseite des Behälters zu erzielen. Wird das intumeszierende Material als Platte eingesetzt, kann diese ebenfalls mithilfe einer stoffschlüssigen Verbindung, insbesondere einer Kleberschicht, an der Innenseite des Behälters befestigt werden. Alternativ können auch mehrere Platten zur Anwendung kommen, wobei die Platten entsprechende Abmessungen aufweisen, um eine vollflächige Auskleidung der Innenseiten des Behälters erzielen und auf eine stoffschlüssige Verbindung zur Befestigung verzichten zu können.

Kommt das intumeszierende Material in Form eines Schaumes zum Einsatz, kann dieser direkt auf die Innenseite des Behälters aufgesprüht werden. Bevor das aufgesprühte intumeszierende Material getrocknet ist, kann dessen Form noch verändert werden, um beispielsweise eine besonders ebene und/oder glatte Oberfläche zu erhalten.

Um die Verbindung zwischen der Umgebung und dem Gegenstand auf besonders effiziente Weise unterbrechen zu können, ist es vorteilhaft, wenn das intumeszierende Material flächig an zumindest einer Innenseite des Behälters angeordnet ist. Selbst bei flächiger Anordnung des intumeszierenden Materials an nur einer Innenseite des Behälters, kann im Brandfall nahezu das gesamte Innere des Behälters vom ausgedehnten Material erfasst werden. Dadurch wird der vom Gegenstand ausgehende Brand innerhalb des Behälters besonders effizient verhindert, da eine Sauerstoffzufuhr zum Brandherd zum einen durch Verschließen der Öffnung und zum anderen durch Bedecken des Gegenstandes erschwert wird. Darüber hinaus isoliert das ausgedehnte Material den Brand im Inneren des Behälters und verringert eine Wärmeübertragung auf die Behälterwände. Dieser Effekt kann verstärkt werden, wenn an mehreren Innenseiten des Behälters flächig intumeszierendes Material angeordnet wird. Es hat sich bewährt, dass das intumeszierende Material bei einer Temperatur von zumindest 100 °C, bevorzugt zumindest 200 °C, besonders bevorzugt zumindest 600 °C,
vollständig ausgedehnt ist. Dadurch ist es möglich, die Ausbreitung des Brandes frühzeitig zu verhindern. Entsprechend wird das intumeszierende Material in einem unausgedehnten Zustand an zumindest einer Innenseite des Behälters angeordnet. Beim Überhitzen und/oder Brennen des Gegenstandes wird Wärme auf das intumeszierende Material übertragen und dieses erhitzt. Hierbei beginnt das intumeszierende Material sich mit steigender Temperatur immer weiter auszudehnen, wobei eine Geschwindigkeit der Ausdehnung maßgeblich vom eingesetzten Material abhängt. Vorzugsweise werden intumeszierende Materialien eingesetzt, welche bei einer Starttemperatur von zumindest 200 °C beginnen, sich auszudehnen. Dabei kann sich bereits während des Ausdehnens des intumeszierenden Materials eine brandhemmende Wirkung ergeben. Erreicht das intumeszierende Material eine Endtemperatur, welche ebenfalls maßgeblich von der Zusammensetzung des intumeszierenden Materials abhängt, ist die Ausdehnung abgeschlossen und das intumeszierende Material liegt als ausgedehntes Material vor.

Abhängig von einem Einsatzbereich des intumeszierenden Materials kann eine Temperaturspanne zwischen Start- und Endtemperatur beliebig groß sein. Im erfindungsgemäßen Einsatzbereich des Behälters wird für intumeszierende Materialien eine kleine Temperaturspanne bevorzugt, sodass Materialien mit einer Starttemperatur von 200 °C bereits bei Temperaturen von circa 250 °C vollständig ausgedehnt sein können. Das vollständig ausgedehnte Material weist in der Regel ein Vielfaches, zumindest das dreifache, bevorzugt zumindest das 50-fache, besonders bevorzugt zumindest das 250-fache, des ursprünglichen Volumens des intumeszierenden Materials auf.

Darüber hinaus kann das ausgedehnte Material auch gasdicht sein, wodurch beim Brand freigesetzte giftige, gesundheitsschädliche und/oder entzündbare Gase sowie Rauch von der Umgebung separiert werden. Folglich können derartige intumeszierende Materialien den Brand innerhalb des Behälters frühzeitig erkennen und besonders effizient verhindern, wobei das ausgedehnte Material gegebenenfalls sogar ein Entweichen von Gasen verhindert.

Üblicherweise wird der erfindungsgemäße Behälter in einem Set in Verbindung mit einem entsprechenden Gegenstand, insbesondere einem Mobiltelefon, eingesetzt, wobei der Gegenstand durch die Öffnung in den Behälter einbringbar ist. Hierdurch kann der Gegenstand besonders sicher im Behälter aufbewahrt werden. Dabei wird der Gegenstand auf einfache Weise über die Öffnung in den Behälter eingebracht und kann dort, beispielsweise über Nacht, auch unbeaufsichtigt aufbewahrt werden. Zudem kann der Akkumulator des Gegenstandes während der Aufbewahrung im Behälter über das Ladekabel, induktiv oder auf eine andere Weise aufgeladen werden, ohne im Brandfall ein Übergreifen des Brandes auf die Umgebung befürchten zu müssen. Dementsprechend kann der Gegenstand auch über einen längeren Zeitraum auf besonders sichere Weise im Behälter gelagert werden.

Eine Entsorgung von Gegenständen mit zumindest einem integrierten Akkumulator stellt für Entsorgungsunternehmen, insbesondere bei großen Gegenständen und/oder Akkumulatoren, oftmals eine große Herausforderung dar. Um einen beschädigten Gegenstand, insbesondere ein verunfalltes Elektro- oder Hybridfahrzeug, bis zu dessen Entsorgung und/oder der Entsorgung einzelner Komponenten des Gegenstandes, beispielsweise des Akkumulators, sicher aufbewahren zu können, wird dieser auf einfache Weise in den Behälter eingebracht. Dadurch kann auf weitere Sicherheitsvorkehrungen bei einer Lagerung des Gegenstandes verzichtet werden.

Vorzugsweise erstreckt sich die Öffnung entlang einer ersten Richtung, welche eine Breite des Gegenstandes um 20 mm bis 2000 mm überragt, und einer zweiten Richtung, welche eine Länge oder eine Höhe des Gegenstandes um 20 mm bis 1000 mm überragt. Dadurch kann der Gegenstand besonders einfach in den Behälter eingebracht werden. Aktuelle Mobiltelefone weisen in der Regel eine Länge von 110 mm bis 180 mm, eine Breite von 50 mm bis 90 mm und eine Höhe von 4 mm bis 15 mm auf. Um ein besonders einfaches Einbringen derartiger Mobiltelefone in den Behälter sicherstellen zu können, überragt die Öffnung die Breite des Mobiltelefons vorzugsweise um 20 mm bis 60 mm und die Länge oder Höhe des Mobiltelefons vorzugsweise um 20 mm bis 100 mm. Entsprechend weist die Öffnung eines derartigen Behälters bevorzugt eine Länge von 130 mm bis 280 mm, eine Breite von 70 mm bis 150 mm und/oder eine Höhe von 24 mm bis 115 mm auf. Zweckmäßigerweise ist die Öffnung des Behälters derart groß ausgebildet, dass das Mobiltelefon von Hand in den Behälter eingebracht werden kann, ohne ein Anstoßen des Mobiltelefons am Behälter, insbesondere an Innenseiten des Behälters, in Kauf nehmen zu müssen. Zudem kann auf diese Weise auch ein Einwerfen des Mobiltelefons in den Behälter vermieden werden, wie dies beispielsweise bei Einwurfschlitzen der Fall ist. Darüber hinaus kann der Gegenstand über dieselbe Öffnung aus dem Behälter entfernt werden. Dementsprechend kann die Beschädigung des Gegenstandes verhindert und eine mögliche Brandursache vermieden werden.

Neben dem intumeszierendem Material ist als weitere Verschlussmöglichkeit der Öffnung ein Verschlusselement an den Behälter angeordnet. Im Brandfall kann somit beispielsweise die Zeit überbrückt werden, welche das intumeszierende Material benötigt, um sich ausreichend auszudehnen und die Öffnung zu schließen. Das Verschlusselement kann sich dabei zügig bewegen, beispielsweise wie unten beschrieben ausdehnen, ausrollen oder schwenken, um einen ersten Schutz und ein erstes Abdecken der Öffnung zu erzielen. Somit wird die Umgebung z.B. vor einer Rauchentwicklung des innenliegenden Gegenstands geschützt, auch wenn sich das intumeszierende Material noch nicht vollständig ausgedehnt hat.

Entsprechend der erfindungsgemäßen Ausführungsform des Verfahrens wird ein Verschlusselement bereitgestellt, welches an der Innenseite des Behälters derart angeordnet ist und konfiguriert ist, in einem ersten Zustand die Öffnung freizugeben und in einem zweiten Zustand die Öffnung zu verschließen. Bei einer Brandentwicklung wird zuerst die Öffnung schließt mit dem Verschlusselement geschlossen und anschließend wird die Öffnung von dem ausgedehnten intumeszierendem Material verschlossen.

Hierbei kann die Schließgeschwindigkeit des Verschlusselements beispielsweise aufgrund des Eigengewichts bzw. der Schwerkraft des Verschlusselements eingestellt werden. Ferner können weitere Hilfsmittel vorgesehen werden. So kann beispielsweise eine entsprechende Feder eingesetzt werden, um eine Beschleunigungskraft in Richtung dem zweiten Zustand auf das Verschlusselement auszuüben.

Wie in den folgenden Ausführungsbeispielen detailliert erörtert, kann das Verschlusselement in dem ersten Zustand eingeklappt, aufgerollt oder auf geschwenkt vorliegen, um die Öffnung freizugeben. Das Verschlusselement besteht dabei aus einem feuerfesten Material, wie beispielsweise Metall, Keramik oder feuerfesten Kunststoffen. Das Verschlusselement kann steif, z. B. aus einem blechartigen Material, oder flexibel aus einem gewebten, stoffartigen Material bestehen. Ferner können ein weiteres intumeszierende Material das Verschlusselement ausbilden.

In dem zweiten Zustand verschließt das Verschlusselement die Öffnung. Dabei kann das Verschlusselement beispielsweise an einem Absatz anliegen. Beispielsweise kann an der Innenseite des Behälters entlang der Öffnung ein Absatz ausgebildet werden, an welchem das Verschlusselement in dem zweiten Zustand anliegt. Somit wird die Öffnung weitestgehend verschlossen und abgedichtet. Die vollständige Dichtheit wird anschließend insbesondere durch das ausgedehnte intumeszierende Material erzeugt.

Gemäß einer weiteren beispielhaften Ausführungsform ist das Verschlusselement mittels eines Sicherungselements in dem ersten Zustand fixierbar ist, wobei das Sicherungselement derart ausgebildet ist, dass bei einer Brandentwicklung das Sicherungselement das Verschlusselement löst, damit diese in den zweiten Zustand verstellbar ist.

Gemäß einer beispielhaften Ausführungsform ist das Sicherungselement als Schmelzsicherung derart ausgebildet ist, dass bei einer vorbestimmten Temperatur das Verschlusselement von dem Sicherungselement lösbar ist, wobei die vorbestimmte Temperatur insbesondere mindestens 60° C, insbesondere mehr als 80 °C oder insbesondere mehr als 100 °C aufweist. Dabei kann das Sicherungselement beispielsweise aus einem Kleber oder einem weichen Lötmaterial (z. B. Lötzinn) ausgebildet werden. Das Sicherungselement kann somit beispielsweise aus niedrigschmelzendem Metall, Wachs oder Kunststoff bestehen. Im erstarrten festen Zustand der Schmelzsicherung haftet das Verschlusselement an der Schmelzsicherung und wird in dem ersten Zustand gehalten. Beispielsweise kann das Sicherungselement aus einem fieldschem Metall aufweisend z. B. Indium, Bismut und Zinn, wobei das fieldsche Metall z. B. einen Schmelzpunkt von 62°C oder höher aufweisen kann. Ab einer vorbestimmten Temperatur, beispielsweise bei mehr als 60 °C, mehr als 80 °C oder insbesondere mehr als 100 °C schmilzt die Schmelzsicherung auf, sodass die Haltekraft reduziert wird und sich das Verschlusselement von der Schmelzsicherung gelöst. Aufgrund seiner Schwerkraft oder beispielsweise mittels der oben beschriebenen Feder bewegt sich das Verschlusselement von dem ersten Zustand in dem zweiten Zustand zum Schließen der Öffnung.

Gemäß einer weiteren beispielhaften Ausführungsform weist das Sicherungselement einen Befestigungsmechanismus auf, welcher betätigbar ist, um das Sicherungselement von dem ersten Zustand zu lösen. Der Befestigungsmechanismus weist insbesondere ein mechanisches Heizelement auf, wie beispielsweise den unten beschriebenen Rückhaltezapfen, welcher selektiv und steuerbar das Verschlusselement halten und freigeben kann. Ferner kann er Befestigungsmechanismus eine magnetische Befestigung für das Verschlusselement aufweisen. Beispielsweise kann an der Innenseite des Behälters ein Elektromagnet angeordnet werden, welcher das Verschlusselement in einem aktivierten Zustand anzieht und in dem ersten Zustand hält. Der Elektromagneten kann beispielsweise über eine Steuereinheit gesteuert werden. Beispielsweise kann bei einem Brandalarm oder Rauchalarm die Steuereinheit den Elektromagneten selbsttätig steuern, sodass dieser das Verschlusselement freigibt und dieses in den zweiten Zustand verfährt.

Gemäß einer weiteren beispielhaften Ausführungsform weist der Befestigungsmechanismus einen Rückhaltzapfen auf, welcher in dem ersten Zustand das Sicherungselement selektiv fixiert, wobei der Rückhaltzapfen mittels eines elektrischen Aktuators oder mittels eines Elektromagneten steuerbar ist. Beispielsweise kann der Rückhaltzapfen in dem ersten Zustand das Verschlusselement festhalten, indem er bereichsweise mit dem Verschlusselements überlappt. Der Rückhaltzapfen kann beispielsweise entlang der inneren Fläche des Behälters verschoben werden, bis eine Überlappung mit dem Verschlusselements aufgelöst wird und dieses entsprechend in den zweiten Zustand bewegbar ist. Der elektrische Aktuator kann beispielsweise über die oben beschriebene Steuereinheit betätigbar sein.

Gemäß einer weiteren beispielhaften Ausführungsform ist das Verschlusselement als Verschlussklappe ausgebildet ist, welche schwenkbar an der Innenseite mittels eines Lagers (Scharniers) derart angeordnet ist, dass die Verschlussklappe zwischen dem ersten Zustand und dem zweiten Zustand schwenkbar ist. Die Verschlussklappe ist in flächiges Bauteil, welches entsprechende Dimensionen der Öffnung aufweist, sodass die Verschlussklappe in dem zweiten Zustand die Öffnung schließt.

Gemäß einer weiteren beispielhaften Ausführungsform weist die Verschlussklappe eine Vielzahl von Klappenelementen auf, die gelenkig miteinander verbunden sind, wobei in dem ersten Zustand die Klappenelemente zusammengeklappt sind und in dem zweiten Zustand zum Verschließen der Öffnung aufgeklappt sind. Die Klappenelemente sind beispielsweise über Gelenke bzw. Scharniere miteinander verbunden und können sozusagen ziehharmonikaartig zusammengefaltet werden. Alternativ können die Klappenelemente auch zusammengeschoben werden, sodass die Klappenelemente teleskopartig ein- und ausfahrbar ausgebildet sein können. Somit wird im ersten Zustand, in welchem die Klappenelemente zusammengeklappt sind und insbesondere sich flächig berühren, Installationsraum an der inneren Fläche des Behälters eingespart.

Gemäß einer weiteren beispielhaften Ausführungsform ist zwischen den Klappenelementen ein Sicherungselement, insbesondere eine Schmelzsicherung, vorgesehen ist, um die Klappenelemente in dem eingeklappten Zustand zu halten. Ein erstes Klappenelement ist beispielsweise mittels eines Gelenks an der Innenfläche des Behälters befestigt. Zwischen der inneren Fläche und des ersten Klappenelements ist ein erstes Sicherungselement, beispielsweise eine Schmelzsicherung, vorgesehen. Ebenfalls ist zwischen dem ersten und dem daran schwenkbar befestigten zweiten Klappenelement ebenfalls ein Sicherungselement, beispielsweise eine weitere Schmelzsicherung, vorgesehen, um das zweite Klappenelement an dem ersten Klappenelement zu halten. Mit anderen Worten kann zwischen allen Klappenelementen ein Sicherungselement bzw. eine Schmelzsicherung vorgesehen werden, um in dem ersten Zustand die Klappenelemente aneinander eingeklappt zu befestigen. Nach Anstieg einer Temperatur im Brandfall lösen sich die Sicherungselemente und die entsprechenden Klappenelemente voneinander, sodass die Klappenelemente die Öffnung in dem zweiten Zustand verschließen.

Gemäß einer weiteren beispielhaften Ausführungsform ist das Verschlusselement als Vorhang ausgebildet ist, welcher an der Innenseite mittels eines Lagers derart angeordnet ist, dass der Vorhang zwischen dem ersten Zustand und dem zweiten Zustand entfaltbar, insbesondere ausrollbar, ist. Der Vorhang besteht insbesondere aus einem flexibel zusammenfalten baren bzw. zusammen rollbaren Material. Beispielsweise kann der Vorhang ebenfalls aus einem elastisch verformbaren Material bestehen. Mittels eines Sicherungselements, beispielsweise mittels einer Schmelzsicherung, kann der Vorhang in dem ersten Zustand fixiert werden. Beispielsweise kann der Vorhang aufgerollt werden. Ein erstes Ende des Vorhangs kann an der inneren Fläche des Behälters befestigt werden. Ein gegenüberliegendes zweites Ende des Vorhangs kann beispielsweise ebenfalls an der inneren Fläche des Behälters mittels des Sicherungselement, beispielsweise mittels der Schmelzsicherung, befestigt werden. Nach dem Lösen des Sicherungselements bewegt sich das zweite Ende, beispielsweise Schwerkraft gesteuert, in Richtung Boden und verschließt somit die Öffnung.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Weitere Merkmale, Vorteile und Wirkungen der Erfindung ergeben sich aus der nachfolgenden Darstellung eines Ausführungsbeispiels. In den Zeichnungen, auf welche dabei Bezug genommen wird, zeigen:
Fig. 1 eine perspektivische Darstellung einer ersten Ausführungsvariante eines nicht erfindungsgemäßen feuerbeständigen Behälters.
Fig. 2 eine Draufsicht des Behälters gemäß Fig. 1.
Fig. 3 eine Schnittansicht des Behälters gemäß Fig. 1 entlang der Linie III-III.
Fig. 4 eine perspektivische Darstellung einer weiteren Ausführungsvariante eines nicht erfindungsgemäßen feuerbeständigen Behälters.
Fig. 5 eine Draufsicht des Behälters gemäß Fig. 4.
Fig. 6 eine Schnittansicht des Behälters gemäß Fig. 4 entlang der Linie VI-VI.
Fig. 7 eine Seitenansicht des Behälters mit einer Verschlussklappe im ersten Zustand, gemäß einer beispielhaften, erfindungsgemäßen Ausführungsform.
Fig. 8 eine Frontansicht des Behälters mit einer Verschlussklappe im ersten Zustand, gemäß der Ausführungsform aus Fig. 7.
Fig. 9 eine Seitenansicht des Behälters mit einer Verschlussklappe im zweiten Zustand, gemäß einer beispielhaften, erfindungsgemäßen Ausführungsform.
Fig. 10 und Fig. 11 Seitenansicht des Behälters mit einer Verschlussklappe mit Verschlusselementen im ersten Zustand und im zweiten Zustand, gemäß einer beispielhaften, erfindungsgemäßen Ausführungsform.
Fig. 12 und Fig. 13 Seitenansicht des Behälters mit einem Vorhang im ersten Zustand und im zweiten Zustand, gemäß einer beispielhaften, erfindungsgemäßen Ausführungsform.
Fig. 14 eine bildhafte Darstellung eines Behälters mit einer Verschlussklappe gemäß der Ausführungsform aus Fig. 8.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

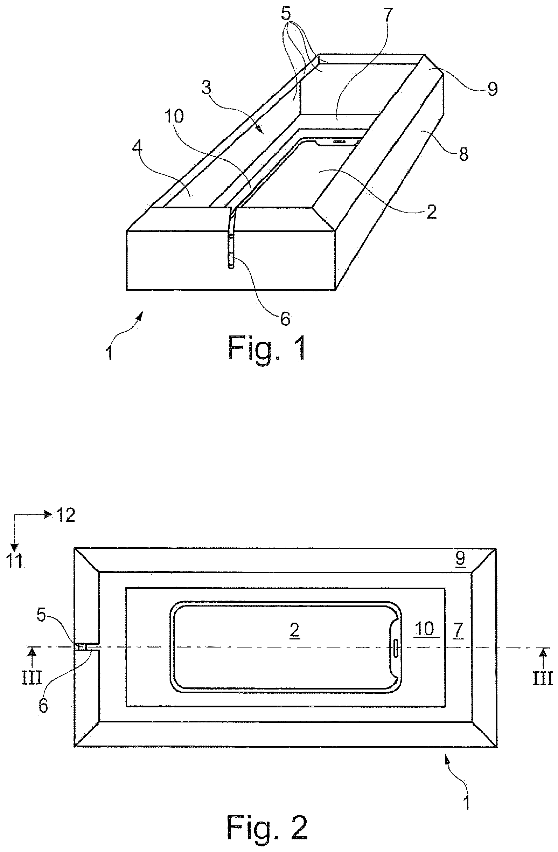

In **Fig. 1 bis 3** ist eine erste, nicht erfindungsgemäße Ausführungsvariante eines feuerbeständigen

Behälters 1 dargestellt. Dieser Behälter 1 weist eine Öffnung 3 auf, über welche ein Mobiltelefon 2 in den Behälter 1 einbringbar ist. Hierbei liegt das Mobiltelefon 2 auf einer Grundfläche 7 des Behälters 1, welche zumindest im Bereich des Mobiltelefons 2 vorzugsweise aus feuerbeständigem Material auf Basis von Calcium- und/oder Aluminiumsilicaten gebildet ist. Zudem weist die Grundfläche 7 im Bereich des Mobiltelefons 2 eine Auflage 10 aus weichem Material wie Stoff oder Filz auf, um eine Beschädigung des Mobiltelefons 2 bei einem Einbringen in den Behälter 1 zu vermeiden.

Die Grundfläche 7 steht mit vier angrenzenden Seitenflächen 8 in Verbindung, wobei die angrenzenden Seitenflächen 8 mit weiteren Seitenflächen 9 verbunden sind. Durch einen von angrenzenden Seitenflächen 8 und weiteren Seitenflächen 9 eingeschlossenen Winkel α, welcher in dieser Ausführungsvariante 135 Grad beträgt, ergeben sich zur Öffnung 3 hin abgeschrägte Behälterwände. Diese sind aus einem Metall, insbesondere einem Stahlblech, gebildet, können alternativ oder bereichsweise aber auch aus Keramik, Gestein oder einem feuerbeständigen Material auf Basis von Calcium- und/oder Aluminiumsilicaten gebildet sein.

An Innenseiten 4 der Seitenflächen 8, 9 ist flächig ein intumeszierendes Material 5 angeordnet, sodass sich eine vollflächige Auskleidung der Innenseiten 4 des Behälters 1 mit intumeszierendem Material 5 ergibt. In dieser Ausführungsvariante liegt das intumeszierende Material 5 in Form von Matten vor, welche durch eine Kleberschicht mit den Innenseiten 4 der Seitenflächen 8, 9 verbunden sind. Alternativ kann das intumeszierende Material 5 auch in Form von Platten vorliegen oder als Schaum auf die Innenseiten 4 der Seitenflächen 8, 9 aufgebracht werden.

Darüber hinaus weist diese Ausführungsvariante des Behälters 1 eine weitere Öffnung 6 auf, welche seitlich angeordnet und mit der Öffnung 3 verbunden ist. Durch eine derartige Ausbildung der weiteren Öffnung 6 kann das Mobiltelefon 2 selbst dann in den Behälter 1 eingebracht werden, wenn dieses über ein Ladekabel an eine Stromversorgung angeschlossen ist. Auf ein Entfernen des Ladekabels zum Einbringen des Mobiltelefons 2 in den Behälter 1 kann daher verzichtet werden. Dabei ist die weitere Öffnung 6 vorzugsweise so dimensioniert, dass diese lediglich ein Kabel des Ladekabels, nicht jedoch dessen Stecker, aufnehmen kann. Hierdurch kann ein Herausreißen des Ladekabels und eine damit verbundene Beschädigung des Mobiltelefons 2 verhindert werden.

Überhitzt das Mobiltelefon 2 und gerät dieses im Behälter 1, beispielsweise während eines Ladevorganges, in Brand, dehnt sich das intumeszierende Material 5 selbsttätig aus. Das intumeszierende Material 5 dieser Ausführungsvariante beginnt sich bei Temperaturen zwischen 180 °C und 250 °C auszudehnen und liegt bereits bei Temperaturen zwischen 280 °C und 350 °C als vollständig ausgedehntes Material vor. Hierbei weist das vollständig ausgedehnte Material vorzugsweise das dreifache bis 300-fache Volumen des intumeszierenden Materials 5 auf. Dadurch kann das ausgedehnte Material, vorzugsweise indem das Mobiltelefon 2 bedeckt und/oder die Öffnung 3 verschlossen wird, eine durch die Öffnung 3 verlaufende Verbindung zwischen dem Mobiltelefon 2 und einer Umgebung des Behälters 1 unterbrechen. Dabei kann vom ausgedehnten Material auch eine gasdichte Barriere geschaffen werden, sodass während des Brandes entstehende giftige, gesundheitsschädliche und/oder entzündbare Gase sowie Rauch nicht aus dem Behälter 1 austreten können. Entsprechend wird ein Übergreifen des Brandes vom Mobiltelefon 2 auf die Umgebung verhindert.

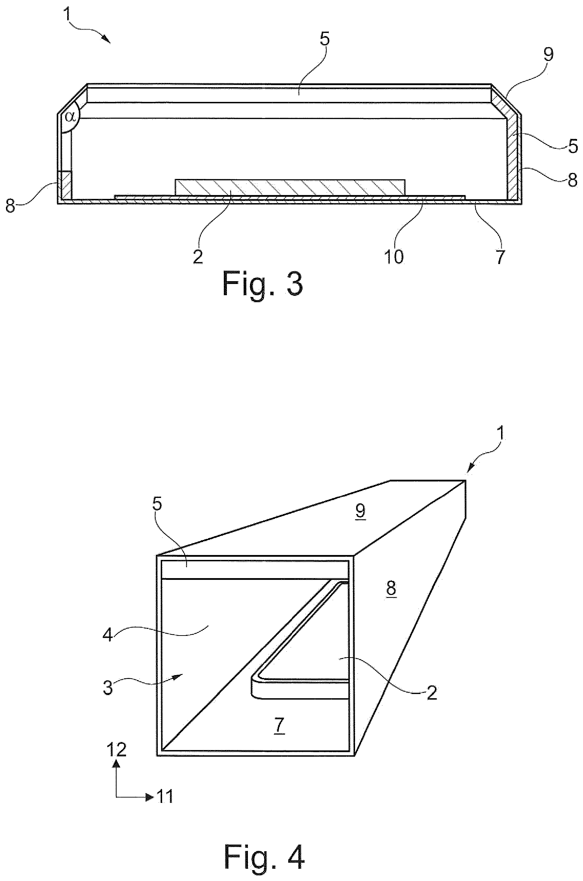

In der **Fig. 2** ist eine Draufsicht des Behälters 1 gemäß Fig. 1 dargestellt. Hierbei sind besonders die weiteren Seitenflächen 9 des Behälters 1 und eine Auswirkung der winkeligen Verbindung zu den angrenzenden Seitenflächen 8 gut erkennbar, wodurch die Öffnung 3 des Behälters 1 verkleinert wird. Zudem ist eine Dimensionierung der weiteren Öffnung 6 und das unter der weiteren Öffnung 6 angeordnete intumeszierende Material 5 ersichtlich. Aus dieser Darstellung geht auch ein Größenverhältnis von Öffnung 3 und Mobiltelefon 2 hervor, wobei die Öffnung 3 das Mobiltelefon 2 in einer ersten Richtung 11 eine Breite des Mobiltelefons 2 um etwa 40 mm und in einer zweiten Richtung 12 eine Länge des Mobiltelefons 2 um etwa 70 mm überragt. Außerdem können anhand dieser Darstellung auch Abmessungen der Auflage 10 auf einfache Weise beurteilt werden, in der Regel ist die Auflage 10 größer als das Mobiltelefon 2 und kleiner als die Öffnung 3 ausgebildet. Alternativ kann auch die gesamte Grundfläche 7 des Behälters 1 mit der Auflage 10 versehen sein. In **Fig. 3** ist eine Schnittansicht der Ausführungsvariante des Behälters 1 gemäß Fig. 1 entlang der Linie III-III gezeigt. Hierbei ist erkennbar, dass sowohl an die Grundfläche 7 angrenzenden Seitenflächen 8 als auch an weiteren Seitenflächen 9 intumeszierendes Material 5 angeordnet ist. Die Grundfläche 7 und die Seitenflächen 8, 9 sind gleichmäßig dick ausgeführt und an der Grundfläche 7 ist die Auflage 10 angeordnet, auf welcher das Mobiltelefon 2 abgelegt werden kann. Zudem zeigt die Schnittansicht, dass unterhalb der weiteren Öffnung 6 ebenfalls intumeszierendes Material 5 angeordnet ist, um bei einem Brand auch die weitere Öffnung 6 zumindest teilweise verschließen zu können.

In den **Fig. 4 bis 6** ist eine weitere, nicht erfindungsgemäße Ausführungsvariante des feuerbeständigen

Behälters 1 dargestellt. Diese weist im Gegensatz zur ersten Ausführungsvariante der Fig. 1 bis 3 eine seitliche Öffnung 3 auf. Jedoch wird auch bei dieser Ausführungsvariante das Mobiltelefon 2 auf der Grundfläche 7 des Behälters 1 abgelegt, welche aus einem feuerbeständigen Material wie einem Metall, insbesondere einem Stahlblech, gebildet ist. Alternativ oder bereichsweise, insbesondere im Bereich des Mobiltelefons 2, kann die Grundfläche 7 auch aus Keramik, Gestein oder einem feuerbeständigen Material auf Basis von Calcium- und/oder Aluminiumsilicaten gebildet sein.

Von der Grundfläche 7 aus erstrecken sich die angrenzenden Seitenflächen 8 vertikal nach oben. Die hintere angrenzende Seitenfläche 8 schließt mit der weiteren Seitenfläche 9 einen Winkel α von mehr als 90° ein, in der konkreten Ausführungsvariante ungefähr 100°, wodurch eine Oberseite des Behälters 1 als eine Art Schrägdach ausgebildet und ein Platzbedarf des Behälters 1 reduziert ist. Die angrenzenden Seitenflächen 8 und die weitere Seitenfläche 9 sind aus einem Metall, insbesondere einem Stahlblech, gebildet, können alternativ oder bereichsweise aber auch aus Keramik, Gestein oder einem feuerbeständigen Material auf Basis von Calcium- und/oder Aluminiumsilicaten gebildet sein. Das Mobiltelefon 2 wird in dieser Ausführungsvariante über die Öffnung 3 seitlich in den Behälter 1 eingebracht, wobei die Öffnung 3 ausreichend groß ist, um ein einfaches Einbringen des Mobiltelefons 2 per Hand zu ermöglichen. Hierbei überragt die Öffnung 3 die Breite des Mobiltelefons 2 entlang der ersten Richtung 11 um circa 40 mm und eine Höhe des Mobiltelefons 2 entlang der zweiten Richtung 12 um circa 90 mm. Dementsprechend kann das Mobiltelefon 2 auch mit angeschlossenem Ladekabel in den Behälter 1 eingebracht werden, ohne das Mobiltelefon 2 zuerst abstecken zu müssen.

Darüber hinaus ist die Innenseite 4 der weiteren Seitenfläche 9 mit einem Streifen aus intumeszierendem Material 5 versehen, welcher sich bei einem Brand im Inneren des Behälters 1 ausdehnt und die Öffnung 3 verschließen kann. Hierbei dehnt sich das intumeszierende Material 5 zumindest auf das sechsfache Volumen, insbesondere zumindest das zehnfache Volumen, aus. Alternativ kann die Innenseite 4 der weiteren Seitenfläche 9 auch flächig mit einem Schaum, einer Platte, einer Folie oder einer Matte aus intumeszierendem Material 5 ausgekleidet sein, sodass auch das Mobiltelefon 2 vom ausgedehnten Material bedeckt wird. In diesem Fall wird das Unterbrechen der Verbindung zwischen dem Mobiltelefon 2 und der Umgebung durch die als Schrägdach ausgebildete weitere Seitenfläche 9 begünstigt, da sich das intumeszierende Material 5 schneller zur Öffnung 3 hin ausdehnen kann.

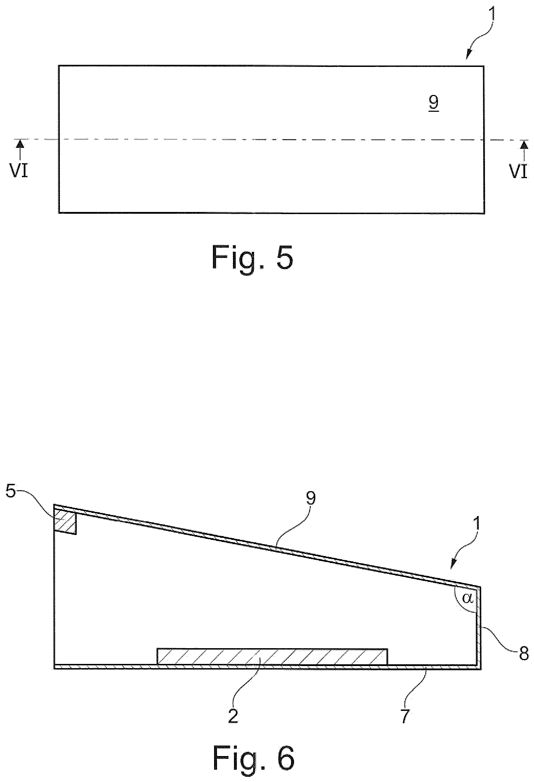

In der **Fig. 5** ist eine Draufsicht der weiteren Ausführungsvariante des Behälters 1 gemäß Fig. 4 dargestellt. Dabei ist die als Schrägdach ausgebildete weitere Seitenfläche 9 des Behälters 1 ersichtlich.

In **Fig. 6** ist eine Schnittansicht der weiteren Ausführungsvariante des Behälters 1 gemäß Fig. 4 entlang der Linie VI-VI gezeigt. Hierbei sind die Dimensionen eines derartigen Behälters 1 besonders einfach erkennbar. Zudem gehen daraus Verhältnisse zwischen der als Schrägdach ausgebildeten weiteren Seitenfläche 9, der angrenzenden Seitenfläche 8 und der Grundfläche 7 des Behälters 1 in eindeutiger Weise hervor. Darüber hinaus ist auch eine bevorzugte Position des Mobiltelefons 2 innerhalb des Behälters 1 ersichtlich. Ein erfindungsgemäßer feuerbeständiger Behälter 1 ermöglicht ein unbeaufsichtigtes Laden und/oder Aufbewahren eines Mobiltelefons 2, ohne bei einem Brand des Mobiltelefons 2 ein Übergreifen des Brandes auf eine Umgebung des Behälters 1 befürchten zu müssen.

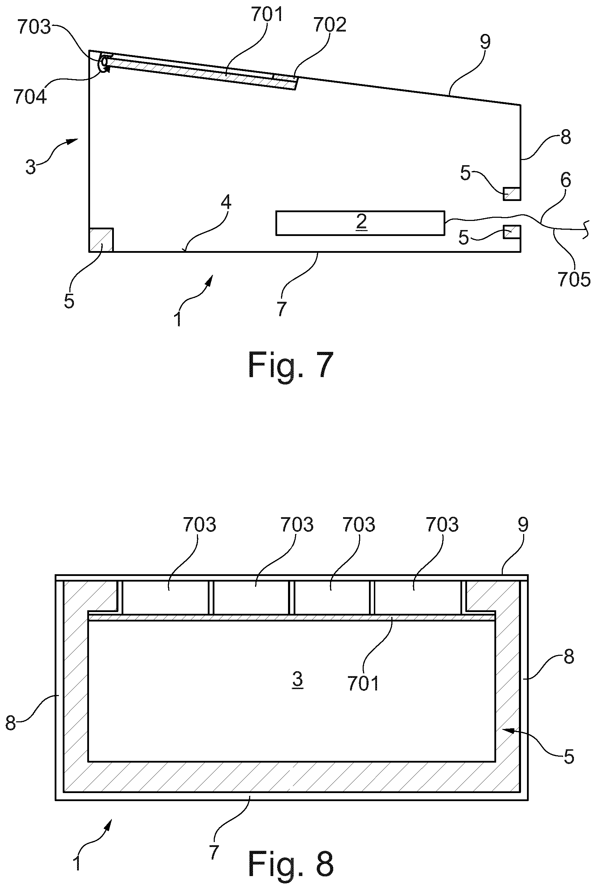

**Fig. 7** zeigt eine Seitenansicht des Behälters 1 mit einer Verschlussklappe 701 als Verschlusselement im ersten Zustand und **Fig. 8** eine Frontansicht des Behälters 1 mit der Verschlussklappe 701 im ersten Zustand.

Die Verschlussklappe 701 ist an der Innenseite 4 des Behälters 1 derart angeordnet und konfiguriert, in einem ersten Zustand die Öffnung 3 freizugeben und in einem zweiten Zustand die Öffnung 3 zu verschließen. Neben dem intumeszierendem Material 5 kann als weitere Verschlussmöglichkeit der Öffnung 3 mittels der Verschlussklappe 701 verschlossen werden. Die Verschlussklappe 701 es beispielsweise mittels eines Scharniers 703 an der Innenseite 4 schwenkbar befestigt. Hierbei kann die Schließgeschwindigkeit der Verschlussklappe 701 beispielsweise aufgrund des Eigengewichts bzw. der Schwerkraft der Verschlussklappe 701 eingestellt werden. Ferner kann ein entsprechendes Federelement 704, wie beispielsweise eine Ringfeder, eine Druckfeder oder eine Zugfeder, eingesetzt werden, um eine Beschleunigungskraft in Richtung dem zweiten Zustand auf die Verschlussklappe 701 auszuüben.

Die Verschlussklappe 701 ist mittels eines Sicherungselements 702 in dem ersten Zustand fixierbar, wobei das Sicherungselement 702 derart ausgebildet ist, dass bei einer Brandentwicklung das Sicherungselement 702 die Verschlussklappe 701 löst, damit diese in den zweiten Zustand verstellbar ist.

Das Sicherungselement 702 ist beispielsweise als Schmelzsicherung ausgebildet, Im erstarrten festen Zustand der Schmelzsicherung haftet die Verschlussklappe 701 an der Schmelzsicherung und wird in dem ersten Zustand gehalten. Ab einer vorbestimmten Temperatur schmilzt die Schmelzsicherung auf, sodass die Haltekraft reduziert wird und sich die Verschlussklappe 701 von der Schmelzsicherung gelöst. Aufgrund seiner Schwerkraft oder beispielsweise mittels der oben beschriebenen Feder 704 bewegt sich die Verschlussklappe 701 von dem ersten Zustand in dem zweiten Zustand zum Schließen der Öffnung 3.

Darüber hinaus weist diese Ausführungsvariante des Behälters 1 die weitere Öffnung 6 auf, welche an der hinteren Wand 8 gegenüber der Öffnung 3 ausgebildet ist. Durch eine derartige Ausbildung der weiteren Öffnung 6 z. B. ein Kabel 705, welches mit dem Gegenstand 2 (z.B. einem Mobiltelefon oder einer induktiven Ladestation, auf welcher ein Mobiltelefon zum Laden auflegbar ist) selbst dann in den Behälter 1 eingebracht werden, wenn der Gegenstand 2 über das Ladekabel 705 an eine Stromversorgung angeschlossen ist. Die weitere Öffnung 6 ist entsprechen kleiner als die Öffnung 3 ausgebildet. Zudem ist aufgrund der beabstandeten Anordnung der weiteren Öffnung 6 zu der Öffnung 3 die Kabelführung entsprechend beabstandet von der Öffnung 3. Somit wird das Verschlusselement, z.B. die Verschlussklappe 701, nicht von dem Kabel 705 blockiert, wenn das Verschlusselement in den zweiten Zustand übergeht. Die weitere Öffnung 6 kann ebenfalls mit intumeszierendem Material 5 umgeben sein, um bei Temperaturanstieg die weitere Öffnung 6 zu verschließen bzw. abzudichten.

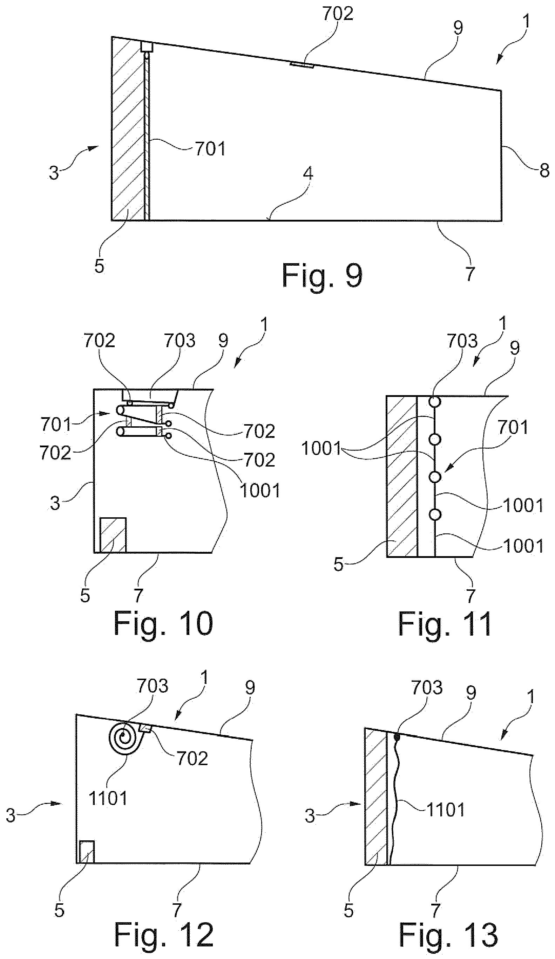

**Fig. 9** zeigt eine Seitenansicht des Behälters 1 mit einer Verschlussklappe 701 im zweiten Zustand, in welchem die Öffnung 3 geschlossen ist. Die Verschlussklappe 701 ist in flächiges Bauteil, welches entsprechende Dimensionen der Öffnung aufweist, sodass die Verschlussklappe in dem zweiten Zustand die Öffnung schließt.

**Fig. 10** und **Fig. 11** zeigen Seitenansichten des Behälters 1 mit einer Verschlussklappe 701 mit Verschlusselementen 1001 im ersten Zustand (Fig. 10) und im zweiten Zustand (Fig. 11), gemäß einer beispielhaften Ausführungsform. Die Verschlussklappe 701 weist eine Vielzahl von Klappenelementen 1001 auf, die gelenkig miteinander verbunden sind, wobei in dem ersten Zustand die Klappenelemente zusammengeklappt sind (Fig. 10) und in dem zweiten Zustand zum Verschließen der Öffnung 3 aufgeklappt sind (Fig. 11). Die Klappenelemente 1001 sind beispielsweise über Gelenke bzw. Scharniere miteinander verbunden und können sozusagen ziehharmonikaartig zusammengefaltet werden. Somit wird im ersten Zustand, in welchem die Klappenelemente 1001 zusammengeklappt sind und insbesondere sich flächig berühren, Installationsraum an der inneren Fläche 4 des Behälters 1 eingespart.

Zwischen den Klappenelementen 1001 ist ein Sicherungselement 702, insbesondere eine Schmelzsicherung, vorgesehen ist, um die Klappenelemente 1001 in dem eingeklappten Zustand zu halten. Ein erstes Klappenelement ist beispielsweise mittels eines Gelenks an der Innenfläche 4 des Behälters 1 befestigt. Zwischen der inneren Fläche 4 und des ersten Klappenelements 1001 ist ein erstes Sicherungselement 702, beispielsweise eine Schmelzsicherung, vorgesehen. Ebenfalls ist zwischen dem ersten und dem daran schwenkbar befestigten zweiten Klappenelement 1001 ebenfalls ein Sicherungselement 702, beispielsweise eine weitere Schmelzsicherung, vorgesehen, um das zweite Klappenelement 1001 an dem ersten Klappenelement 1001 zu halten. Mit anderen Worten kann zwischen allen Klappenelementen 1001 ein Sicherungselement 702 bzw. eine Schmelzsicherung vorgesehen werden, um in dem ersten Zustand die Klappenelemente 1001 aneinander eingeklappt zu befestigen. Nach Anstieg einer Temperatur im Brandfall lösen sich die Sicherungselemente 702 und die entsprechenden Klappenelemente 1001 voneinander, sodass die Klappenelemente 1001 die Öffnung 4 in dem zweiten Zustand verschließen.

**Fig. 12** und **Fig. 13** zeigen Seitenansichten des Behälters 1 mit einem Vorhang 1101 im ersten Zustand und im zweiten Zustand, gemäß einer beispielhaften Ausführungsform. Der Vorhang 1101 ist an der Innenseite mittels eines Lagers 703 derart angeordnet ist, dass der Vorhang 1101 zwischen dem ersten Zustand und dem zweiten Zustand entfaltbar, insbesondere ausrollbar, ist. Der Vorhang 1101 besteht insbesondere aus einem flexibel zusammenfalten baren bzw. zusammenrollbaren Material. Mittels eines Sicherungselements 702, beispielsweise mittels einer Schmelzsicherung, kann der Vorhang 1101 in dem ersten Zustand fixiert werden. Beispielsweise kann der Vorhang 1101 aufgerollt werden. Ein erstes Ende des Vorhangs 1101 kann an dem Lager 703 an der inneren Fläche 4 des Behälters 1 befestigt werden. Ein gegenüberliegendes zweites Ende des Vorhangs 1101 kann beispielsweise ebenfalls an der inneren Fläche 4 des Behälters 1 mittels des Sicherungselements 702, beispielsweise mittels der Schmelzsicherung, befestigt werden. Nach dem Lösen des Sicherungselements 702 bewegt sich das zweite Ende, beispielsweise Schwerkraft gesteuert, in Richtung Boden und verschließt somit die Öffnung 4.

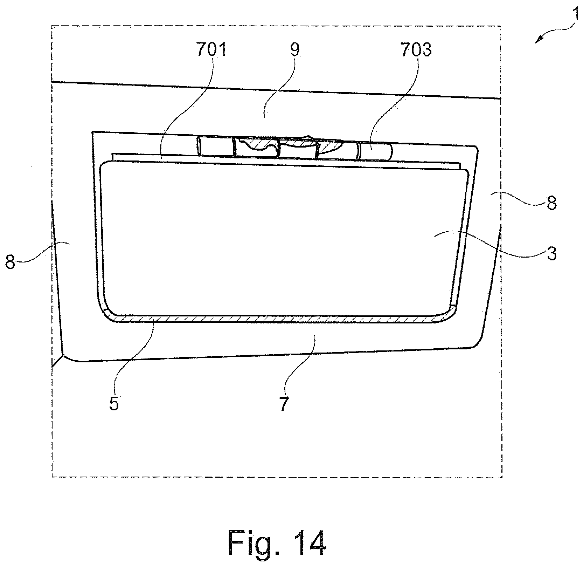

**Fig. 14** zeigt eine bildhafte Darstellung eines Behälters 1 mit einer Verschlussklappe 701 gemäß der Ausführungsform aus Fig. 7 bis Fig. 9. die Verschlussklappe 701 wird mittels eines Scharnier 703 an der oberen weiteren Seitenfläche neuen gehalten. Entlang der Seitenflächen 8 und der Grundfläche 7 ist um die Öffnung 3 das intumeszierende Material 5 ausgebildet. Im Brandfall schließt sich zunächst die Verschlussklappe 701 und verschließt die Öffnung 3. Währenddessen und in einem Zeitraum, nachdem die Verschlussklappe 701 die Öffnung 3 bereits verschlossen hat, vergrößert sich das intumeszierende Material 5 und verschließt anschließend ebenfalls die Öffnung 3.somit kann zügig die Öffnung 3 mittels der Verschlussklappe 701 geschlossen werden und anschließend, aufgrund der Trägerin Ausdehnung des intumeszierende Materials 5, die Öffnung 3 mit diesem dichten verschlossen werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 1: Behälter
- 2: Mobiltelefon
- 3: Öffnung
- 4: Innenseite
- 5: intumeszierendes Material
- 6: weitere Öffnung
- 7: Grundfläche
- 8: Seitenflächen
- 9: weitere Seitenfläche
- 10: Auflage
- 11: erste Richtung

- 701: Verschlussklappe
- 702: Sicherungselement
- 703: Lager/Scharnier
- 704: Federelement
- 705: Kabel
- 1001: Klappenelement
- 1101: Vorhang

## Patentansprüche

1. Feuerbeständiger Behälter (1) zur Aufnahme eines Gegenstandes, welcher eine Öffnung (3) aufweist, über welche der Gegenstand in den Behälter (1) einbringbar ist,
wobei an einer Innenseite (4) des Behälters (1) zumindest bereichsweise ein intumeszierendes Material (5) derart angeordnet ist, dass sich das intumeszierende Material (5) bei einer Brandentwicklung im Bereich eines im Behälter (1) angeordneten Gegenstandes ausdehnt, sodass eine durch die Öffnung (3) verlaufende Verbindung zwischen dem Gegenstand und einer Umgebung durch das ausgedehnte Material unterbrochen ist, um ein Übergreifen eines Brandes des Gegenstandes auf die Umgebung zu verhindern,
wobei der feuerbeständige Behälter (1) ein Verschlusselement aufweist, welches an der Innenseite (4) des Behälters (1) derart angeordnet ist und konfiguriert ist, in einem ersten Zustand die Öffnung (3) freizugeben und in einem zweiten Zustand die Öffnung (3) zu verschließen.

2. Feuerbeständiger Behälter (1) nach Anspruch 1, **dadurch gekennzeichnet, dass**
der Behälter (1) zumindest eine weitere Öffnung (6) aufweist, über welche ein Inneres des Behälters (1) zugänglich ist.

3. Feuerbeständiger Behälter (1) nach Anspruch 1 oder 2, **dadurch gekennzeichnet, dass**
der Behälter (1) zumindest bereichsweise aus Metall, insbesondere Stahl, Keramik und/oder Gestein gebildet ist.

4. Feuerbeständiger Behälter (1) einem der Ansprüche 1 bis 3, **dadurch gekennzeichnet, dass**
der Behälter (1) zumindest bereichsweise aus einem feuerbeständigen, insbesondere silicatbasierten, Material gebildet ist.

5. Feuerbeständiger Behälter (1) nach einem der Ansprüche 1 bis 4, **dadurch gekennzeichnet, dass**
der Behälter (1) eine Grundfläche (7) mit zumindest einer angrenzenden Seitenfläche (8) aufweist, wobei die angrenzende Seitenfläche (8) mit zumindest einer weiteren Seitenfläche (9) verbunden ist, und dass
insbesondere die angrenzende Seitenfläche (8) und die weitere Seitenfläche (9) einen Winkel (α) von 90° bis 175°, bevorzugt von 125° bis 160°, einschließen.

6. Feuerbeständiger Behälter (1) nach einem der Ansprüche 1 bis 5, **dadurch gekennzeichnet, dass**
das intumeszierende Material (5) als Schaum, Matte, Platte, Folie und/oder Streifen ausgebildet ist, und/oder dass
das intumeszierende Material (5) flächig an zumindest einer Innenseite (4) des Behälters (1) angeordnet ist, und/oder dass
das intumeszierende Material (5) bei einer Temperatur von zumindest 100 °C, bevorzugt zumindest 200 °C, besonders bevorzugt zumindest 600 °C, vollständig ausgedehnt ist.

7. Feuerbeständiger Behälter (1) nach einem der Ansprüche 1 bis 6,
wobei das Verschlusselement mittels eines Sicherungselements (702) in dem ersten Zustand fixierbar ist,
wobei das Sicherungselement (702) derart ausgebildet ist, dass bei einer Brandentwicklung das Sicherungselement (702) das Verschlusselement löst, damit diese in den zweiten Zustand verstellbar ist.

8. Feuerbeständiger Behälter (1) nach Anspruch 7,
wobei das Sicherungselement (702) als Schmelzsicherung derart ausgebildet ist, dass bei einer vorbestimmten Temperatur das Verschlusselement von dem Sicherungselement (702) lösbar ist,
wobei die vorbestimmte Temperatur insbesondere mindestens 60° C aufweist.

9. Feuerbeständiger Behälter (1) nach Anspruch 7,
wobei das Sicherungselement (702) einen Befestigungsmechanismus aufweist, welcher betätigbar ist, um das Sicherungselement (702) von dem ersten Zustand zu lösen.

10. Feuerbeständiger Behälter (1) nach Anspruch 9,
wobei der Befestigungsmechanismus einen Rückhaltzapfen aufweist, welcher in dem ersten Zustand das Sicherungselement (702) selektiv fixiert,
wobei der Rückhaltzapfen mittels eines elektrischen Aktuators oder mittels eines Elektromagneten steuerbar ist.

11. Feuerbeständiger Behälter (1) nach einem der Ansprüche 1 bis 10,
wobei das Verschlusselement als Verschlussklappe (701) ausgebildet ist, welche schwenkbar an der Innenseite (4) mittels eines Lagers (702) derart angeordnet ist, dass die Verschlussklappe (701) zwischen dem ersten Zustand und dem zweiten Zustand schwenkbar ist.

12. Feuerbeständiger Behälter (1) Anspruch 11,
die Verschlussklappe eine Vielzahl von Klappenelementen (1001) aufweist, die gelenkig miteinander verbunden sind,
wobei in dem ersten Zustand die Klappenelemente 1001) zusammengeklappt sind und in dem zweiten Zustand zum Verschließen der Öffnung aufgeklappt sind, wobei insbesondere zwischen den Klappenelementen (1001) ein Sicherungselement (702) insbesondere eine Schmelzsicherung, vorgesehen ist, um die Klappenelemente (1001) in dem eingeklappten Zustand zu halten.

13. Feuerbeständiger Behälter (1) nach einem der Ansprüche 1 bis 12,
wobei das Verschlusselement als Vorhang (1101) ausgebildet ist, welcher an der Innenseite (4) mittels eines Lagers (702) derart angeordnet ist, dass der Vorhang (1101) zwischen dem ersten Zustand und dem zweiten Zustand entfaltbar, insbesondere ausrollbar, ist.

14. Set zur Eindämmung eines Brandes umfassend einen Gegenstand, insbesondere ein Mobiltelefon (2), und einen feuerbeständigen Behälter (1) nach einem der Ansprüche 1 bis 13, wobei der Gegenstand durch die Öffnung (3) in den Behälter (1) einbringbar ist.

15. Verfahren zum Schützen eines Gegenstandes in einem feuerbeständigen Behälter (1) zur Aufnahme des Gegenstandes,
Bereitstellen einer Öffnung (3) in dem Behälter (1), durch welche der Gegenstand in den Behälter (1) einbringbar ist,
Anordnen eines intumeszierenden Materials (5) zumindest bereichsweise an einer Innenseite (4) des Behälters (1) derart, dass sich das intumeszierende Material (5) bei einer Brandentwicklung im Bereich eines im Behälter (1) angeordneten Gegenstandes ausdehnt, sodass eine durch die Öffnung (3) verlaufende Verbindung zwischen dem Gegenstand und einer Umgebung durch das ausgedehnte Material unterbrochen ist, um ein Übergreifen eines Brandes des Gegenstandes auf die Umgebung zu verhindern, und
Bereitstellen eines Verschlusselements, welches an der Innenseite (4) des Behälters (1) derart angeordnet ist und konfiguriert ist, in einem ersten Zustand die Öffnung (3) freizugeben und in einem zweiten Zustand die Öffnung (3) zu verschließen,
wobei bei einer Brandentwicklung das Verschlusselement zuerst die Öffnung (3) schließt und die Öffnung (3) wird anschließend von dem ausgedehnten intumeszierendem Material (5) verschlossen.

## Claims

1. A fire-resistant container (1) for receiving an object, which comprises an opening (3) via which the object can be introduced into the container (1), wherein an intumescent material (5) is arranged at least in regions on an inner side (4) of the container (1) in such a way that the intumescent material (5) expands in the region of an object arranged in the container (1) when a fire develops, so that a connection between the object and an environment running through the opening (3) is interrupted by the expanded material in order to prevent a fire of the object from reaching the environment,
wherein the fire-resistant container (1) comprises a closure element which is arranged on the inner side (4) of the container (1) and is configured in such a way as to expose the opening (3) in a first state and to close the opening (3) in a second state.

2. The fire-resistant container (1) according to claim 1, **characterized in that** the container (1) comprises at least one further opening (6) via which an interior of the container (1) is accessible.

3. The fire-resistant container (1) according to claim 1 or 2, **characterized in that**
the container (1) is formed at least in regions from metal, in particular steel, ceramic and/or rock.

4. The fire-resistant container (1) according to one of the claims 1 to 3, **characterized in that**
the container (1) is formed at least in regions from a fire-resistant, in particular silicate-based, material.

5. The fire-resistant container (1) according to one of the claims 1 to 4, **characterized in that**
the container (1) comprises a base surface (7) with at least one adjacent side surface (8), wherein the adjacent side surface (8) is connected to at least one further side surface (9), and **in that**
in particular the adjacent side surface (8) and the further side surface (9) enclose an angle (α) of 90° to 175°, preferably of 125° to 160°.

6. The fire-resistant container (1) according to one of the claims 1 to 5, **characterized in that**
the intumescent material (5) is formed as a foam, mat, plate, foil and/or strip, and/or **in that**
the intumescent material (5) is arranged in a planar manner on at least one inner side (4) of the container (1), and/or **in that**
the intumescent material (5) is completely expanded at a temperature of at least 100°C, preferably at least 200°C, especially preferably at least 600°C.

7. The fire-resistant container (1) according to one of the claims 1 to 6, wherein the closure element can be fixed in the first state by means of a securing element (702),
wherein the securing element (702) is formed in such a way that the securing element (702) releases the closure element when a fire develops, so that the latter can be adjusted into the second state.

8. The fire-resistant container (1) according to claim 7,
wherein the securing element (702) is formed as a fuse in such a way that the closure element can be released from the securing element (702) at a predetermined temperature,
wherein the predetermined temperature comprises in particular at least 60°C.

9. The fire-resistant container (1) according to claim 7,
wherein the securing element (702) comprises a fastening mechanism which can be actuated in order to release the securing element (702) from the first state.

10. The fire-resistant container (1) according to claim 9,
wherein the fastening mechanism comprises a retaining pin which selectively fixes the securing element (702) in the first state,
wherein the retaining pin can be controlled by means of an electric actuator or by means of an electromagnet.

11. The fire-resistant container (1) according to one of the claims 1 to 10, wherein the closure element is formed as a closure flap (701) which is arranged pivotably on the inner side (4) by means of a bearing (702) in such a way that the closure flap (701) can be pivoted between the first state and the second state.

12. The fire-resistant container (1) according to claim 11,
wherein the closure flap comprises a plurality of flap elements (1001) which are connected to one another in an articulated manner,
wherein in the first state the flap elements (1001) are folded together and in the second state are unfolded in order to close the opening,
wherein in particular a securing element (702), in particular a fuse, is provided between the flap elements (1001) in order to hold the flap elements (1001) in the folded-in state.

13. The fire-resistant container (1) according to one of the claims 1 to 12, wherein the closure element is formed as a curtain (1101) which is arranged on the inner side (4) by means of a bearing (702) in such a way that the curtain (1101) can be unfolded, in particular rolled out, between the first state and the second state.

14. A set for controlling a fire comprising an object, in particular a mobile phone (2), and a fire-resistant container (1) according to one of the claims 1 to 13, wherein the object can be introduced into the container (1) through the opening (3).

15. A method for protecting an object in a fire-resistant container (1) for receiving the object,providing an opening (3) in the container (1) through which the object can be introduced into the container (1),
arranging an intumescent material (5) at least in regions on an inner side (4) of the container (1) in such a way that the intumescent material (5) expands in the region of an object arranged in the container (1) when a fire develops, so that a connection between the object and an environment running through the opening (3) is interrupted by the expanded material in order to prevent a fire of the object from reaching the environment, and
providing a closure element which is arranged on the inner side (4) of the container (1) and is configured in such a way as to expose the opening (3) in a first state and to close the opening (3) in a second state,
wherein, when a fire develops, first the closure element closes the opening (3) and subsequently the opening (3) is closed by the expanded intumescent material (5).

## Revendications

1. Caisson résistant au feu (1) permettant d'accueillir un objet et présentant une ouverture (3) par l'intermédiaire de laquelle ledit objet peut être introduit dans le caisson (1),
dans lequel un matériau intumescent (5) est agencé au moins localement au niveau d'un côté intérieur (4) du caisson (1) de telle manière que le matériau intumescent (5) se dilate en cas de départ de feu dans la région d'un objet agencé dans le caisson (1), de sorte qu'une liaison, passant par l'ouverture (3), entre l'objet et l'environnement est interrompue grâce au matériau dilaté afin d'empêcher que l'embrasement de l'objet ne se propage dans l'environnement,
dans lequel le caisson résistant au feu (1) présente un élément de fermeture qui est agencé au niveau du côté intérieur (4) du caisson (1) et est configuré de manière à libérer l'ouverture (3) dans un premier état et à fermer l'ouverture (3) dans un second état.

2. Caisson résistant au feu (1) selon la revendication 1, **caractérisé en ce que**
le caisson (1) présente au moins une ouverture (6) supplémentaire par l'intermédiaire de laquelle un intérieur du caisson (1) est accessible.

3. Caisson résistant au feu (1) selon la revendication 1 ou 2, **caractérisé en ce que**
le caisson (1) est au moins localement constitué de métal, en particulier d'acier, de céramique et/ou de roche.

4. Caisson résistant au feu (1) selon l'une quelconque des revendications 1 à 3, **caractérisé en ce que**
le caisson (1) est constitué au moins localement d'un matériau résistant au feu, en particulier à base de silicate.

5. Caisson résistant au feu (1) selon l'une quelconque des revendications 1 à 4, **caractérisé en ce que**
le caisson (1) présente une surface de base (7) avec au moins une surface latérale (8) adjacente, dans lequel la surface latérale (8) adjacente est reliée à au moins une surface latérale (9) supplémentaire, et **en ce que**
en particulier la surface latérale (8) adjacente et la surface latérale (9) supplémentaire forment un angle (a) compris entre 90° à 175°, de manière préférée compris entre 125° et 160°.

6. Caisson résistant au feu (1) selon l'une quelconque des revendications 1 à 5, **caractérisé en ce que**
le matériau intumescent (5) est réalisé sous forme de mousse, de mat, de plaque, de film et/ou de bande, et/ou **en ce que**
le matériau intumescent (5) est agencé en surface au niveau d'au moins un côté intérieur (4) du caisson (1), et/ou **en ce que**
le matériau intumescent (5) est complètement dilaté à une température d'au moins 100°C, de manière préférée d'au moins 200°C, de manière particulièrement préférée d'au moins 600°C.

7. Caisson résistant au feu (1) selon l'une quelconque des revendications 1 à 6,
dans lequel l'élément de fermeture peut être immobilisé dans le premier état au moyen d'un élément de sécurité (702),
dans lequel l'élément de sécurité (702) est réalisé de telle manière que, en cas de départ de feu, l'élément de sécurité (702) libère l'élément de fermeture afin qu'il puisse être placé dans le second état.

8. Caisson résistant au feu (1) selon la revendication 7,
dans lequel l'élément de sécurité (702) est réalisé sous la forme d'une sécurité fusible de telle manière que, à une température prédéterminée, l'élément de fermeture peut être libéré par l'élément de sécurité (702),
dans lequel la température prédéterminée est en particulier d'au moins 60°C.

9. Caisson résistant au feu (1) selon la revendication 7,
dans lequel l'élément de sécurité (702) présente un mécanisme de fixation qui peut être actionné afin de libérer l'élément de sécurité (702) du premier état.

10. Caisson résistant au feu (1) selon la revendication 9,
dans lequel le mécanisme de fixation présente un tenon de retenue qui, dans le premier état, immobilise de manière sélective l'élément de sécurité (702),
dans lequel le tenon de retenue peut être commandé au moyen d'un actionneur électrique ou au moyen d'un électroaimant.

11. Caisson résistant au feu (1) selon l'une quelconque des revendications 1 à 10,
dans lequel l'élément de fermeture est réalisé sous la forme d'un clapet de fermeture (701) qui est agencé de manière pivotante au niveau du côté intérieur (4) au moyen d'un palier (702) de telle manière que le clapet de fermeture (701) peut pivoter entre le premier état et le second état.

12. Caisson résistant au feu (1) selon la revendication 11,
dans lequel le clapet de fermeture présente une pluralité d'éléments de clapet (1001) qui sont reliés entre eux de manière articulée,
dans lequel, dans le premier état, les éléments de clapet (1001) sont repliés et, dans le second état, sont dépliés afin de fermer l'ouverture,
dans lequel un élément de sécurité (702), en particulier une sécurité fusible, est en particulier prévu entre les éléments de clapet (1001) afin de retenir les éléments de clapet (1001) dans l'état replié.

13. Caisson résistant au feu (1) selon l'une quelconque des revendications 1 à 12,
dans lequel l'élément de fermeture est réalisé sous la forme d'un rideau (1101) qui est agencé au niveau du côté intérieur (4) au moyen d'un palier (702) de telle manière que le rideau (1101) peut être déployé, en particulier peut être déroulé, entre le premier état et le second état.

14. Ensemble de confinement d'incendie comprenant un objet, en particulier un téléphone mobile (2), et un caisson résistant au feu (1) selon l'une quelconque des revendications 1 à 13, dans lequel l'objet peut être introduit dans le caisson (1) à travers l'ouverture (3).

15. Procédé de protection d'un objet dans un caisson résistant au feu (1) permettant d'accueillir ledit objet, comprenant les étapes consistant à
fournir une ouverture (3) dans le caisson (1), à travers laquelle ledit objet peut être introduit dans le caisson (1),
agencer un matériau intumescent (5) au moins localement au niveau d'un côté intérieur (4) du caisson (1) de telle manière que le matériau intumescent (5) se dilate en cas de départ de feu dans la région d'un objet agencé dans le caisson (1), de sorte qu'une liaison, passant par l'ouverture (3), entre l'objet et l'environnement est interrompue grâce au matériau dilaté afin d'empêcher que l'embrasement de l'objet ne se propage dans l'environnement, et
fournir un élément de fermeture agencé au niveau du côté intérieur (4) du caisson (1) et configuré de manière à libérer l'ouverture (3) dans un premier état et à fermer l'ouverture (3) dans un second état,
dans lequel, en cas de départ de feu, l'élément de fermeture ferme d'abord l'ouverture (3) et l'ouverture (3) est ensuite fermée par le matériau intumescent (5) dilaté.
